# EUROPÄISCHE PATENTSCHRIFT

(11) **EP 3 033 738 B1**
(45) Veröffentlichungstag und Bekanntmachung des Hinweises auf die Patenterteilung: **30.06.2021**
(21) Anmeldenummer: 14744279.2
(22) Anmeldetag: 22.07.2014
(51) Int. Cl.: G07C 9/00, B60R 25/00

(54) **AUTHENTIFIZIERUNGSVERFAHREN ZUR BERECHTIGUNGSÜBERPRÜFUNG EINES BENUTZERS BEI EINEM KRAFTFAHRZEUGSCHLIESSSYSTEM**
AUTHENTICATION METHOD FOR CHECKING THE AUTHORISATION OF A USER FOR A MOTOR VEHICLE LOCKING SYSTEM
PROCÉDÉ D'AUTHENTIFICATION POUR LA VÉRIFICATION DE L'AUTORISATION D'UN UTILISATEUR AVEC UN SYSTÈME DE FERMETURE D'UN VÉHICULE AUTOMOBILE

(30) Priorität: 13.08.2013 DE 102013013391
(43) Veröffentlichungstag der Anmeldung: 22.06.2016
(73) Patentinhaber: Huf Hülsbeck & Fürst GmbH & Co. KG, 42551 Velbert (DE)
(72) Erfinder: SCHINDLER, Mirko, 42549 Velbert (DE); GERDES, Bernd, 45355 Essen (DE); MOENIG, Stefan, 58332 Schwelm (DE)
(74) Vertreter: Patentanwaltskanzlei Methling
(86) Internationale Anmeldenummer: PCT/EP2014/002003
(87) Internationale Veröffentlichungsnummer: WO 2015/022047

(56) Entgegenhaltungen:
- CN-A- 102 855 744
- DE-A1- 10 209 890
- DE-A1- 19 505 190
- DE-A1- 19 528 099
- DE-A1-102006 015 045
- DE-B3-102005 004 044
- GB-A- 2 460 240
- US-A1- 2011 086 668
- US-B1- 6 765 495

## Beschreibung

Die Erfindung betrifft ein Authentifizierungsverfahren zur Berechtigungsüberprüfung eines Benutzers bei einem Kraftfahrzeugschließsystem, wobei eine Anfrage seitens einer Sendeeinheit eines Kraftfahrzeuges generiert und ausgesandt wird, die zur Authentifizierung mittels einer externen Sende-/Empfangsvorrichtung empfangen wird und wobei aus der Anfrage unter Anwendung eines Algorithmus mittels der externen Sende-/Empfangsvorrichtung eine Antwort generiert und die Antwort zur Überprüfung von der externen Sende-/Empfangsvorrichtung zu einer Empfangseinheit des Kraftfahrzeuges zurück übertragen und ausgewertet wird.

Ferner betrifft die Erfindung ein entsprechendes Kraftfahrzeugschließsystem.

Derartige Authentifizierungsverfahren zur Berechtigungsüberprüfung eines Benutzers bei einem Kraftfahrzeugschließsystem sind bekannt und werden beispielsweise bei Zündschlüsseln von Kraftfahrzeugen eingesetzt. Nachteilig ist dabei, dass der Schlüssel in eine entsprechende Schlüsselaufnahme am Armaturenträger eingesetzt sein muss. Ferner ist es bekannt, funkbasierte Identifikationsverfahren mittels kapazitiver Sensoren zu aktivieren. Nachteilig ist es dabei, dass die Kommunikation über Funk durch äußere Einflüsse gestört werden kann.

Aus der DE 195 05 190 A1 ist ein elektronischer Schlüssel zur Betätigung eines Schlosses bekannt, wobei das Gehäuse die Form eines dünnen Keils aufweist und wobei das schmale Ende des Keils zum Einstecken in das Schloss ausgebildet ist und die zur Schlossbetätigung wirksamen Teile des elektronischen Schlüssels enthält und das Gehäuse eine Aufnahme für den Schlüsselbart aufweist.

Aus der DE 195 28 099 A1 ist ein elektronisches Schließsystem bekannt, mit einem eine zum bestimmungsgemäßen Betrieb dienende Elektronik enthaltenden Schlüssel und am verschließbaren Teil befindlichen Signalverarbeitungseinrichtungen. Dabei ist eine erste Signalverarbeitungseinrichtung in einem Kraftfahrzeug angeordnet. Der Schlüssel tauscht mit der Signalverarbeitungseinrichtung über Sende- /Empfangsmittel ein codiertes Betriebssignal aus, so dass eine positive Auswertung des Betriebssignals ein mit der Signalverarbeitungseinrichtung in Verbindung stehendes Steuergerät zur Änderung des Schließzustandes entsprechend einer Ver- oder Entriegelung der Türen des Kraftfahrzeugs betätigt. Wenigstens eine zweite Signalverarbeitungseinrichtung ist an einer dem Kraftfahrzeug zuordenbaren Immobilie, wie einer Garage oder einem Haus angeordnet, so dass mittels desselben codierten Betriebssignals eine Ver- oder Entriegelung wenigstens einer Türe der Immobilie durchführbar ist. Dabei ist der Austausch des Betriebssignals zwischen dem Schlüssel und der Signalverarbeitungseinrichtung außerhalb und innerhalb des Kraftfahrzeugs ermöglicht.

Die Aufgabe der Erfindung ist es daher, ein Authentifizierungsverfahren zur Berechtigungsüberprüfung eines Benutzers bei einem Kraftfahrzeugschließsystem derart weiter zu bilden, dass dieses eine berührungslose Authentifizierung bei einem Kraftfahrzeugschließsystem bei einer hohen Ausfallsicherheit gestattet. Eine weitere Aufgabe der Erfindung ist es, ein Kraftfahrzeugschließsystem anzugeben, welches eine berührungslose Authentifizierung eines Benutzers eines Kraftfahrzeuges bei einer hohen Ausfallsicherheit gestattet.

Diese Aufgabe wird erfindungsgemäß durch ein Authentifizierungsverfahren zur Berechtigungsüberprüfung eines Benutzers bei einem Kraftfahrzeugschließsystem gemäß Anspruch 1 sowie durch ein Kraftfahrzeugschließsystem gemäß Anspruch 12 gelöst. Vorteilhafte Weiterbildungen der Erfindung sind in den Unteransprüchen angegeben.

Besonders vorteilhaft bei dem Authentifizierungsverfahren zur Berechtigungsüberprüfung eines Benutzers bei einem Kraftfahrzeugschließsystem, wobei eine Anfrage seitens einer Sendeeinheit eines Kraftfahrzeuges generiert und ausgesandt wird, die zur Authentifizierung mittels einer externen Sende-/Empfangsvorrichtung empfangen wird und wobei aus der Anfrage unter Anwendung eines Algorithmus mittels der externen Sende-/Empfangsvorrichtung eine Antwort generiert und die Antwort zur Überprüfung von der externen Sende-/Empfangsvorrichtung zu einer Empfangseinheit des Kraftfahrzeuges zurück übertragen und ausgewertet wird, ist es, dass die Sendeeinheit die Anfrage in Form optischer Signale aussendet, die mittels zumindest eines optischen Sensors an der externen Sende-/Empfangsvorrichtung erfasst werden.

Besonders vorteilhaft bei dem Kraftfahrzeugschließsystem ist es, dass dieses zur Ausführung des erfindungsgemäßen Authentifizierungsverfahren eingerichtet ist und einen optischen Signalgeber zur Aussendung einer Anfrage und eine Empfangseinheit zum Empfang und zur Auswertung einer zur Überprüfung zu der Empfangseinheit des Kraftfahrzeuges zurück übertragenen Antwort aufweist.

Kern der Erfindung ist somit der Datenaustausch in Form optischer Signale, d.h. dass einerseits Lichtsignale ausgesendet werden, die mittels einer externen Sende-/Empfangsvorrichtung mittels zumindest eines optischen Sensors erfasst werden, wobei die über den optischen Datenaustausch erhaltenen Daten mittels der externen Sende-/Empfangsvorrichtung weiterverarbeitet werden, indem aus der empfangenen Anfrage unter Anwendung des in der Sende-/Empfangsvorrichtung abgespeicherten Algorithmus eine Antwort generiert wird, die zur Überprüfung und zu Authentifizierung des Benutzers zu der Empfangseinheit des Kraftfahrzeuges zurück übertragen wird. Basis des Verfahrens ist somit der optische Datenaustausch anstelle eines Funkverfahrens, welches gegebenenfalls durch externe Einflüsse gestört werden könnte. Besonders vorteilhaft ist es somit, dass das erfindungsgemäße Authentifizierungsverfahren besonders manipulationssicher ist und ferner eine große Ausfallsicherheit aufweist. Hierdurch ist ein gesicherter Codeaustausch zwischen der Sendeeinheit des Kraftfahrzeuges und der externen Sende-/Empfangsvorrichtung gewährleistet.

Dabei handelt es sich bei der externen Sende-/Empfangsvorrichtung um ein Mobilfunkendgerät, welches ein Computerprogramm zur Verarbeitung der empfangenen Anfrage aufweist. Üblicherweise enthalten Mobilfunkendgeräte eine Kamera. Diese Kamera kann bei dem erfindungsgemäßen Verfahren dazu verwendet werden, die von der Sendeeinheit in Form optischer Signale ausgesendete Anfrage zu erfassen und zur weiteren Verarbeitung der so erfassten Anfrage durch Anwendung des auf dem Mobilfunkendgerät abgespeicherten Computerprogramms bereit zu stellen.

Bei den optischen Signalen kann es sich um Lichtsignale im sichtbaren Wellenlängenbereich und/oder um Lichtsignale im nichtsichtbaren Wellenlängenbereich handeln. Besonderer Vorteil, wenn es sich um Lichtsignale im sichtbaren Wellenlängenbereich handelt, liegt darin, dass der Benutzer selbst den Zeitraum, innerhalb dessen die Anfrage in Form optischer Signale übertragen wird, erkennen kann. Es ist jedoch nicht zwingend erforderlich, dass es sich bei den optischen Signalen um Sichtsignale im sichtbaren Wellenlängenbereich handelt. Alternativ oder kumulativ können auch optische Signale in Form von Lichtsignalen im nichtsichtbaren Wellenlängenbereich übertragen werden. Voraussetzung ist jeweils nur, dass der optische Sensor an der externen Sende-/Empfangsvorrichtung entsprechend eingerichtet ist, die übertragenen Lichtsignale zu erfassen und diese zur weiteren Verarbeitung in der externen Sende-/Empfangsvorrichtung bereitzustellen.

Vorzugsweise wird mittels einer Auswerteeinheit des Kraftfahrzeuges unter Anwendung des selben Algorithmus auf die Anfrage ein Prüfresultat ermittelt und ein Abgleich mit der von der externen Sende-/Empfangsvorrichtung zurück übertragenen Antwort durchgeführt. Dabei ist sowohl in der Auswerteeinheit des Kraftfahrzeuges als auch in der externen Sende-/Empfangsvorrichtung der selbe Algorithmus hinterlegt, mittels dessen aus der Anfrage, die an die externe Sende-/Empfangsvorrichtung von dem Kraftfahrzeug übertragen wurde, eine Antwort generiert wird, so dass eine Authentifizierung des Benutzers durch eine Überprüfung der von der Sende-/Empfangsvorrichtung zurück übertragenen Antwort entsprechend möglich ist.

Vorzugsweise wird mittels der optischen Signale zumindest eine Zufallszahl übermittelt, aus der unter Anwendung des Algorithmus eine Antwort, insbesondere eine Antwortzahl ermittelt wird.

Bei dieser besonders bevorzugten Ausführungsform des Authentifizierungsverfahrens erfolgt somit seitens des Kraftfahrzeugschließsystems am Kraftfahrzeug die Generierung einer Zufallszahl, welche in Form optischer Signale mittels einer Sendeeinheit des Kraftfahrzeuges an die externe Sende-/Empfangsvorrichtung übertragen wird. Dabei sind sowohl in einer Auswerteeinheit des Kraftfahrzeuges als auch in der externen Sende-/Empfangsvorrichtung der selbe Rechenalgorithmus hinterlegt, mittels dessen aus der von dem Kraftfahrzeug an die externe Sende-/Empfangsvorrichtung übertragene Zufallszahl ein Ergebnis berechnet wird. Von der Sende-/Empfangsvorrichtung wird dieses aus der Anfrage mittels des Algorithmus errechnete Ergebnis an das Kraftfahrzeug zurück übermittelt, wobei ein Abgleich mit dem seitens der Auswerteeinheit des Kraftfahrzeuges unter Anwendung des selben Algorithmus aus der zuvor gesendeten Zufallszahl ermittelten Resultates ein Abgleich und somit eine Überprüfung erfolgt. Es sind somit sowohl kraftfahrzeugseitig als auch in der externen Sende-/Empfangsvorrichtung der selbe Rechenalgorithmus zur Ermittlung der Antwort aus der als Anfrage übermittelten Zufallszahl abgespeichert, so dass dieser Algorithmus als Schlüssel des Kraftfahrzeugschließsystems dient.

In einer bevorzugten Ausführungsform wird mittels der externen Sende-/Empfangsvorrichtung unter Anwendung des Algorithmus auf die Anfrage eine Antwort generiert und in Form eines Codes, insbesondere als Barcode oder 2D-Code oder 2D-Barcode oder Punktecode oder QR-Code auf einer Anzeigeeinheit der externen Sende-/Empfangsvorrichtung zur Anzeige gebracht, wobei der Code mittels einer Leseeinheit des Kraftfahrzeuges ausgelesen wird. Insbesondere kann eine Auswertung des auf der Anzeigeeinheit der externen Sende-/Empfangsvorrichtung zur Anzeige gebrachten und mittels der Leseeinheit des Kraftfahrzeuges ausgelesenen Codes zur Überprüfung erfolgen.

Besonders bevorzugt kommt als externe Sende-/Empfangsvorrichtung ein Mobilfunkendgerät zum Einsatz, wobei mittels einer in das Mobilfunkendgerät integrierten Kamera die optischen Signale erfasst werden. Anschließend erfolgt mittels eines auf dem Mobilfunkendgerät abgespeicherten Computerprogramms eine Auswertung der Anfrage und eine Ermittlung der entsprechenden Antwort, die dann auf der Anzeigeeinheit des Mobilfunkendgerätes zur Anzeige gebracht wird. In diesem Fall dient das Mobilfunkendgerät als Fahrzeugschlüssel. Voraussetzung ist lediglich, dass das entsprechende Computerprogramm auf dem Mobilfunkendgerät enthaltend den Algorithmus zur Generierung der Antwort aus der Anfrage abgespeichert werden muss.

Als Sendeeinheit zur Aussendung der optischen Signale kann dabei eine beliebige Beleuchtungseinheit des Kraftfahrzeuges zum Einsatz kommen. Insbesondere kann eine Türgriffbeleuchtung und/oder eine Nummernschildbeleuchtung und/oder ein Scheinwerfer und/oder ein Rücklicht oder eine beliebige andere Beleuchtungseinheit des Kraftfahrzeuges als Sendeeinheit zur Aussendung der optischen Signale verwendet werden.

Vorzugsweise wird das Authentifizierungsverfahren außerhalb des Kraftfahrzeuges zur Überprüfung der Zugangsberechtigung zu dem Kraftfahrzeug und/oder im Kraftfahrzeuginnenraum zur Erkennung des Aufenthaltes eines Nutzungsberechtigten im Kraftfahrzeuginnenraum durchgeführt.

Das Authentifizierungsverfahren ist somit sowohl einsetzbar um die Zugangsberechtigung zu dem Kraftfahrzeug zu überprüfen, als auch zur sogenannten Innenraumerkennung. Dies ist bedeutsam, da sichergestellt sein muss, dass nicht beispielsweise ein Kind, welches sich im Kraftfahrzeuginnenraum aufhält, den Motor des Kraftfahrzeuges starten kann, wenn sich die berechtigte Person, also der Fahrzeugführer mit der entsprechenden Sende-/Empfangsvorrichtung des Kraftfahrzeugschließsystems zwar in der Nähe des Kraftfahrzeuges befindet, nicht jedoch im Innenraum, wie dies beispielsweise bei Beladesituationen oder beim Tankvorgang an einer Tankstelle der Fall sein kann. Daher ist es zwingend erforderlich, zu erkennen, ob der Nutzungsberechtigte sich innerhalb des Kraftfahrzeuges oder außerhalb des Kraftfahrzeuginnenraumes aufhält. Das erfindungsgemäße Verfahren ist somit sowohl einsetzbar außerhalb des Kraftfahrzeuges zur Überprüfung der Zugangsberechtigung zu dem Kraftfahrzeug als auch im Kraftfahrzeuginnenraum zur Erkennung des Aufenthalts eines Nutzungsberechtigten im Kraftfahrzeuginnenraum. Hierzu wird der Signalgeber zur Aussendung der optischen Signale innerhalb des Kraftfahrzeuginnenraums angeordnet, um zu gewährleisten, dass eine optische Signalübertragung von dem Signalgeber an die externe Sende-/Empfangsvorrichtung nur innerhalb des Kraftfahrzeuges erfolgen kann.

Vorzugsweise erfolgt die Rückübertragung der Antwort von der externen Sende-/Empfangsvorrichtung mittels optischer Signale und/oder unter Verwendung eines Funkstandards, insbesondere Bluetooth und/oder Bluetooth Low Energie und/oder Nahfeldkommunikation.

Für die Rückübertragung der Antwort von der externen Sende-/Empfangsvorrichtung können somit verschiedene Übertragungswege alternativ oder kumulativ genutzt werden und zum Einsatz kommen. Bei Verwendung optischer Signale zur Rückübertragung der Antwort von der externen Sende-/Empfangsvorrichtung zu einer entsprechenden Empfangseinheit des Kraftfahrzeuges muss somit Sichtkontakt zwischen der Empfangseinheit und der externen Sende-/Empfangsvorrichtung bestehen. Dies ist insbesondere besonders geeignet zur Innenraumerkennung, d.h. zur Erkennung der Anwesenheit des Nutzungsberechtigten im Kraftfahrzeuginnenraum. Zur Innenraumerkennung sind jedoch ebenfalls besonders geeignet Funkstandards wie Bluetooth Low Energie und/oder Nahfeldkommunikation, da auch diese Funkstandards zwar nicht zwingend einen Sichtkontakt zwischen der Empfangseinheit des Kraftfahrzeuges und der externen Sende-/Empfangsvorrichtung voraussetzen, jedoch eine Datenübertragung unter Nutzung dieses Funkstandards nur bei entsprechend kurzen Abständen zwischen der Empfangseinheit des Kraftfahrzeuges und der externen Sende-/Empfangsvorrichtung gewährleistet ist, so dass auch diese Funkstandards zur Innenraumerkennung eingesetzt werden können.

Bei einer bevorzugten Ausführungsform des Verfahrens weist eine erfolgreich durchgeführte Authentifizierung eine zeitlich begrenzte Gültigkeit auf. Das bedeutet, dass bei einer erfolgreich durchgeführten Authentifizierung beispielsweise das Öffnen des Kofferraumdeckels des Kraftfahrzeuges oder der Fahrertür des Kraftfahrzeuges für einen Zeitraum von 10 Sekunden oder 20 Sekunden möglich ist und nach Ablauf dieser Zeitspanne nach einer erfolgreichen Durchführung der Authentifizierung das Kraftfahrzeug wieder verriegelt wird. Hierdurch ist gewährleistet, dass das Kraftfahrzeug nicht von dem Benutzer versehentlich unverriegelt abgestellt wird.

In einer weiteren besonders bevorzugten Ausführungsform werden nach einer erfolgreich durchgeführten Authentifizierung eine Mehrzahl verschiedener Funktionen des Kraftfahrzeugschließsystems zur Nutzung freigegeben. So können beispielsweise die Türen des Kraftfahrzeuges geöffnet werden und/oder der Kofferraumdeckel wird zur Öffnung entriegelt. Es kann somit nach einer erfolgreich durchgeführten Authentifizierung eine Auswahl durch den Benutzer erfolgen. Beispielsweise kann dies dadurch realisiert werden, dass dann, wenn es sich bei der externen Sende-/Empfangsvorrichtung um ein Mobilfunkendgerät handelt, mittels dem auf dem Mobilfunkendgerät abgespeicherten Computerprogramm dem Benutzer nach einer erfolgreichen Authentifizierung verschiedene Piktogramme auf der Anzeigeeinheit des Mobilfunkendgerätes angezeigt werden, aus denen der Benutzer entsprechende Funktionen wie beispielsweise ein automatisches Öffnen der Heckklappe des Kraftfahrzeuges auswählen kann, so dass der Kofferraum unmittelbar für den Benutzer zugänglich gemacht wird und die Kofferraumklappe des Kraftfahrzeuges automatisch geöffnet wird.

Bei einer besonders bevorzugten Ausführungsform wird eine erfolgreich durchgeführte Authentifizierung durch ein optisches Signal und/oder ein akustisches Signal angezeigt, welches seitens der externen Sende-/Empfangsvorrichtung und/oder seitens eines Signalgebers des Kraftfahrzeuges erzeugt wird.

Durch ein derartiges optisches und/oder akustisches Signal wird der Benutzer unmittelbar darüber in Kenntnis gesetzt, dass die Authentifizierung erfolgreich durchgeführt wurde und ihm der Zugang zum Kraftfahrzeug freigegeben ist und/oder verschiedene Funktionen des Kraftfahrzeugschließsystems zur Nutzung freigegeben wurden. Bei diesen freigegebenen Funktionen kann es sich beispielsweise auch um die Aktivierung weiterer Sensoren am Kraftfahrzeug handeln. Beispielsweise können entsprechende Sensoren am Heck des Kraftfahrzeuges aktiviert werden, um das Öffnen der Heckklappe mittels entsprechender Gesten auszulösen, um beispielsweise ein Annähern des Fußes des Benutzers an das Heck des Kraftfahrzeuges zu detektieren, um ein automatisches Öffnen der Heckklappe des Kraftfahrzeuges durch eine entsprechende Bewegung oder Geste des Benutzers auszulösen.

Bei dem Kraftfahrzeugschließsystem welches zur Ausführung des Authentifizierungsverfahrens eingerichtet ist, ist erfindungsgemäß ein optischer Signalgeber zur Aussendung einer Anfrage und eine Empfangseinheit zum Empfang und zur Auswertung einer zur Überprüfung zu der Empfangseinheit des Kraftfahrzeugs zurück übertragenen Antwort vorgesehen. Bei der Anfrage, welche mittels des optischen Signalgebers ausgesandt wird, handelt es sich vorzugsweise um eine Zufallszahl, aus der mittels eines entsprechenden Algorithmus eine Antwort berechnet und zur weiteren Auswertung zu der Empfangseinheit des Kraftfahrzeuges zurück übertragen wird.

Dabei weist das Kraftfahrzeugschließsystem vorzugsweise eine Empfangseinheit zum Empfang optischer Signale und/oder zum Empfang von Funksignalen insbesondere nach einem Funkstandard auf. Als Funkstandard sind dabei insbesondere einsetzbar Bluetooth und/oder Bluetooth Low Energie und/oder Nahfeldkommunikation. Im Falle des Einsatzes eines Funkstandards weist die Empfangseinheit die hierzu erforderlichen Antennen und Mittel zum Signalempfang sowie zur weiteren Signalverarbeitung auf. Alternativ oder kumulativ weist die Empfangseinheit Sensoren zum Empfang optischer Signale im sichtbaren und/oder im nichtsichtbaren Wellenlängenbereich auf.

Vorzugsweise umfasst das System zumindest eine externe Sende-/Empfangsvorrichtung, mittels derer eine von dem optischen Signalgeber ausgesandte Anfrage empfangen und unter Anwendung eines in der externen Sende-/Empfangsvorrichtung abgespeicherten Algorithmus eine Antwort zur Authentifizierung generiert, die von der externen Sende-/Empfangsvorrichtung an eine Empfangseinheit des Kraftfahrzeugschließsystems zurück übertragen wird. Bei der externen Sende-/Empfangsvorrichtung kann es sich vorzugsweise um ein Mobilfunkendgerät handeln, welches eine Kamera aufweist zur Erfassung der von dem optischen Signalgeber ausgesandten optischen Signale und wobei auf dem Mobilfunkendgerät ein entsprechendes Computerprogramm abgespeichert ist, mittels dessen aus der erhaltenen Anfrage eine Antwort zur Authentifizierung generiert wird. Die Rückübertragung an das Kraftfahrzeugschließsystem kann dabei insbesondere unter Nutzung der Anzeigeeinheit des Mobilfunkendgerätes als optisches Signal insbesondere als Code wie beispielsweise ein QR-Code, welcher auf der Anzeigeeinheit des Mobilfunkendgerätes zur Anzeige gebracht wird, erfolgen. Alternativ oder kumulativ kann die Rückübertragung der Antwort von dem Mobilfunkendgerät an das Kraftfahrzeugschließsystem auch unter Nutzung eines Funkstanuards erfolgen.

Ein Ausführungsbeispiel der Erfindung ist in der Figur dargestellt und wird nachfolgend erläutert. Es zeigt:

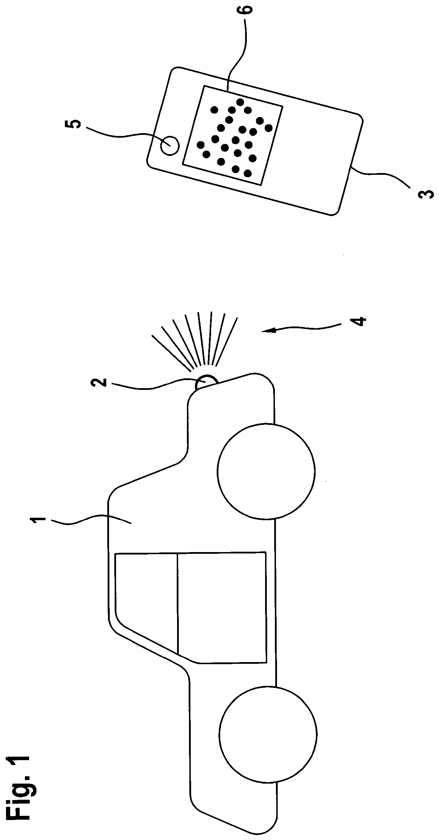

- Fig. 1: Eine schematische Darstellung des Kraftfahrzeugschließsystems mit einer externen Sende-/Empfangsvorrichtung.

Die Erfindung wird nachfolgend anhand eines Ausführungsbeispiels gemäß Fig. 1 erläutert. Dabei verfügt das Fahrzeug 1 über eine Leuchteneinheit 2 in Form einer Leuchtdiode, die im Rahmen des Authentifizierungsverfahrens als Sendeeinheit als Signalgeber zur Aussendung einer Anfrage in Form optischer Signale 4 dient. Die mittels der Beleuchtungseinheit 2 von dem Kraftfahrzeug 1 ausgesendete Anfrage in Form der optischen Signale 4 wird mittels der externen Sende-/Empfangsvorrichtung in Form eines Mobilfunkendgerätes 3 mittels der in das Mobilfunkendgerät 3 integrierten Kamera 5 erfasst. Auf dem Mobilfunkendgerät 3 ist ein entsprechendes Computerprogramm enthaltend einen Rechenalgorithmus zur weiteren Verarbeitung der empfangenen Anfrage abgespeichert. Bei der durch die Beleuchtungseinheit 2 mittels der optischen Signale 4 ausgesendeten Anfrage handelt es sich um eine Zufallszahl, die zuvor seitens des Kraftfahrzeugschließsystems des Kraftfahrzeuges 1 generiert wurde. Aus dieser Zufallszahl wird mittels des in dem Mobilfunkendgerät 3 abgespeicherten Computerprogramms eine Antwortzahl berechnet, die auf der Anzeigeeinheit 6 des Mobilfunkendgerätes 3 in Form eines QR-Codes zur Anzeige gebracht wird.

Diese Antwortzahl, die in Form des QR-Codes auf der Anzeigeeinheit 6 des Mobilfunkendgerätes 3 zur Anzeige gebracht wird, kann sodann an das Kraftfahrzeug 1 zurück übertragen und dort mittels einer entsprechenden Empfangseinheit von der Anzeigeeinheit 6 des Mobilfunkendgerätes 3 ausgelesen und auf diese Weise empfangen werden.

Innerhalb des Kraftfahrzeugschließsystems des Kraftfahrzeugs 1 ist der selbe Rechenalgorithmus abgespeichert, mittels dessen aus der zuvor in Form optischer Signale 4 übermittelten Zufallszahl ebenfalls eine Überprüfungszahl berechnet wird. Ein Abgleich dieser Überprüfungszahl mit der von dem Mobilfunkendgerät 3 empfangenen Antwortzahl dient somit der Authentifizierung des Benutzers. Bei Übereinstimmung der Überprüfungszahl mit der Antwortzahl werden verschiedene Funktionen des Kraftfahrzeugschließsystems des Kraftfahrzeugs 1 freigegeben, wie beispielsweise das Öffnen der Heckklappe und/oder das Öffnen der Türen durch den Benutzer.

Zusätzlich zu der in dem Ausführungsbeispiel dargestellten Rückübertragung der Antwortzahl durch optische Datenübertragung durch Anzeige der Antwortzahl in Form eines QR-Codes auf der Anzeigeeinheit 6 des Mobilfunkendgerätes 3 kann ferner ein Funkstandard zur Rückübertragung der Antwortzahl von dem Mobilfunkendgerät 3 zu dem Kraftfahrzeugschließsystem des Kraftfahrzeuges 1 genutzt werden, wie beispielsweise eine Bluetooth-Verbindung und/oder eine Bluetooth Low Energie-Verbindung und/oder eine Verbindung unter Nutzung der Nahfeldkommunikation.

Hierzu weist das Kraftfahrzeug 1 entsprechende Antennen und die erforderliche Elektronikeinheiten zum Aufbau und zur Unterhaltung einer Funkverbindung unter Nutzung eines Funstandards auf, wie beispielsweise zum Aufbau und zur Unterhaltung einer Bluetooth-Verbindung und/oder einer Bluetooth Low Energie-Verbindung und/oder einer Verbindung unter Nutzung der Nahfeldkommunikation.

Die Anordnung der Beleuchtungseinheit 2 am Heck des Kraftfahrzeugs 1 zur Aussendung der Anfrage in Form eines optischen Signals 4 ist lediglich beispielhaft. Es können eine oder mehrere derartige Sendeeinheiten 2 zur Aussendung der Anfrage in Form eines optischen Signals 4 an dem Kraftfahrzeug 1 angeordnet sein, beispielsweise jeweils an den Türer des Kraftfahrzeugs 1 und/oder an der Heckklappe des Kraftfahrzeugs 1.

## Patentansprüche

1. Authentifizierungsverfahren zur Berechtigungsüberprüfung eines Benutzers bei einem Kraftfahrzeugschließsystem, wobei eine Anfrage seitens einer Sendeeinheit (2) eines Kraftfahrzeuges (1) generiert und ausgesandt wird, die zur Authentifizierung mittels einer externen Sende-/Empfangsvorrichtung (3) empfangen wird und wobei aus der Anfrage unter Anwendung eines Algorithmus mittels der externen Sende-/Empfangsvorrichtung (3) eine Antwort generiert und die Antwort zur Überprüfung von der externen Sende-/Empfangsvorrichtung zu einer Empfangseinheit des Kraftfahrzeuges (1) zurück übertragen und ausgewertet wird, wobei die Sendeeinheit (2) die Anfrage in Form optischer Signale (4) aussendet, die mittels zumindest eines optischen Sensors (5) an der externen Sende-/Empfangsvorrichtung (3) erfasst werden, **dadurch gekennzeichnet, dass** es sich bei der externen Sende-/Empfangsvorrichtung (3) um ein Mobilfunkendgerät handelt, welches ein Computerprogramm zur Verarbeitung der empfangenen Anfrage aufweist.

2. Verfahren nach Anspruch 1, **dadurch gekennzeichnet, dass** es sich bei den optischen Signalen (4) um Lichtsignale im sichtbaren und/oder nichtsichtbaren Wellenlängenbereich handelt.

3. Verfahren nach einem der vorherigen Ansprüche, **dadurch gekennzeichnet, dass** eine Auswerteeinheit des Kraftfahrzeuges (1) unter Anwendung desselben Algorithmus auf die Anfrage ein Prüfresultat ermittelt und einen Abgleich mit der von der externen Sende-/Empfangsvorrichtung (3) zurück übertragenen Antwort durchführt.

4. Verfahren nach einem der vorherigen Ansprüche, **dadurch gekennzeichnet, dass** mittels der optischen Signale (4) zumindest eine Zufallszahl übermittelt wird, aus der unter Anwendung des Algorithmus eine Antwort, insbesondere eine Antwortzahl ermittelt wird.

5. Verfahren nach einem der vorherigen Ansprüche, **dadurch gekennzeichnet, dass** mittels der externen Sende-/Empfangsvorrichtung (3) unter Anwendung des Algorithmus auf die Anfrage eine Antwort generiert und in Form eines Codes, insbesondere als Barcode oder 2D-Code oder 2D-Barcode oder Punktecode oder QR-Code, auf einer Anzeigeinheit (6) der externen Sende-/Empfangsvorrichtung (3) zur Anzeige gebracht wird, wobei der Code mittels einer Leseeinheit des Kraftfahrzeuges (1) ausgelesen wird.

6. Verfahren nach einem der vorherigen Ansprüche, **dadurch gekennzeichnet, dass** eine Beleuchtungseinheit des Kraftfahrzeuges (1) als Sendeeinheit (2) verwendet wird, insbesondere eine Türgriffbeleuchtung und/oder eine Nummerschildbeleuchtung und/oder ein Scheinwerfer und/oder ein Rücklicht.

7. Verfahren nach einem der vorherigen Ansprüche, **dadurch gekennzeichnet, dass** das Authentifizierungsverfahren außerhalb des Kraftfahrzeuges (1) zur Überprüfung der Zugangsberechtigung zu dem Kraftfahrzeug (1) und/oder im Kraftfahrzeuginnenraum zur Erkennung des Aufenthalts eines Nutzungsberechtigten im Kraftfahrzeuginnenraum durchgeführt wird.

8. Verfahren nach einem der vorherigen Ansprüche, **dadurch gekennzeichnet, dass** die Rückübertragung der Antwort von der externen Sende-/Empfangsvorrichtung (3) mittels optischer Signale und/oder unter Verwendung eines Funkstandards, insbesondere Bluetooth und/oder Bluetooth low energy und/oder Nahfeldkommunikation erfolgt.

9. Verfahren nach einem der vorherigen Ansprüche, **dadurch gekennzeichnet, dass** eine erfolgreich durchgeführte Authentifizierung eine zeitlich begrenzte Gültigkeit aufweist.

10. Verfahren nach einem der vorherigen Ansprüche, **dadurch gekennzeichnet, dass** nach einer erfolgreich durchgeführten Authentifizierung eine Mehrzahl verschiedener Funktionen des Kraftfahrzeugschließsystems zur Nutzung freigegeben werden.

11. Verfahren nach einem der vorherigen Ansprüche, **dadurch gekennzeichnet, dass** eine erfolgreich durchgeführte Authentifizierung durch ein optisches und/oder akustisches Signal angezeigt wird, welches seitens der externen Sende-/Empfangsvorrichtung (3) und/oder seitens eines Signalgebers des Kraftfahrzeuges (1) erzeugt wird.

12. Kraftfahrzeugschließsystem welches zur Ausführung eines Authentifizierungsverfahrens nach einem der vorherigen Ansprüche eingerichtet ist und einen optischen Signalgeber (2) zur Aussendung einer Anfrage in Form optischer Signale (4) und eine Empfangseinheit zum Empfang und zur Auswertung einer zur Überprüfung zu der Empfangseinheit des Kraftfahrzeuges (1) zurück übertragenen Antwort aufweist, wobei das System zumindest eine externe Sende-/Empfangsvorrichtung (3) umfasst, mittels derer eine von dem optischen Signalgeber (2) ausgesandte Anfrage empfangen und unter Anwendung eines in der externen Sende-/Empfangsvorrichtung (3) abgespeicherten Algorithmus eine Antwort zur Authentifizierung generiert und zu der Empfangseinheit des Kraftfahrzeuges (1) zurück übertragen wird, **dadurch gekennzeichnet, dass** es sich bei der externen Sende-/Empfangsvorrichtung (3) um ein Mobilfunkendgerät handelt, welches ein Computerprogramm zur Verarbeitung der empfangenen Anfrage aufweist.

13. Kraftfahrzeugschließsystem nach Anspruch 12, **dadurch gekennzeichnet, dass** das System eine Empfangseinheit zum Empfang optischer Signale und/oder zum Empfang von Funksignalen insbesondere nach einem Funkstandard aufweist.

## Claims

1. Authentication method for checking the authorisation of a user for a motor vehicle locking system, wherein a request is generated and transmitted by a transmitting unit (2) of a motor vehicle (1), which request is received for authentication by means of an external transmitting/receiving device (3), and wherein a response is generated from the request by means of the external transmitting/receiving device (3) using an algorithm, and for checking the response is transmitted back from the external transmitting/receiving device to a receiving unit of the motor vehicle (1) and evaluated, wherein the transmitting unit (2) transmits the request in the form of optical signals (4) which are detected by means of at least one optical sensor (5) on the external transmitting/receiving device (3), **characterised in that** the external transmitting/receiving device (3) is a mobile radio terminal which has a computer program for processing the received request.

2. Method according to claim 1, **characterised in that** the optical signals (4) are light signals in the visible and/or non-visible wavelength range.

3. Method according to any one of the previous claims, **characterised in that** an evaluation unit of the motor vehicle (1) determines using the same algorithm a test result to the request and carries out a comparison with the response transmitted back from the external transmitting/receiving device (3).

4. Method according to any one of the previous claims, **characterised in that** at least one random number is transmitted by means of the optical signals (4), from which a response, in particular a response number, is determined using the algorithm.

5. Method according to any one of the previous claims, **characterised in that** a response to the request is generated by means of the external transmitting/receiving device (3) using the algorithm and is displayed in the form of a code, in particular as a barcode or 2D code or 2D barcode or point code or QR code, on a display unit (6) of the external transmitting/receiving device (3), the code being read out by means of a reading unit of the motor vehicle (1).

6. Method according to any one of the previous claims, **characterised in that** a lighting unit of the motor vehicle (1) is used as the transmitting unit (2), in particular a door handle light and/or a number plate light and/or a headlight and/or a tail light.

7. Method according to any one of the previous claims, **characterised in that** the authentication method is carried out externally of the motor vehicle (1) to check the access authorisation to the motor vehicle (1) and/or within the motor vehicle interior to detect the presence of an authorised user in the motor vehicle interior.

8. Method according to any one of the previous claims, **characterised in that** the response is transmitted back from the external transmitting/receiving device (3) by means of optical signals and/or using a radio standard, in particular Bluetooth and/or Bluetooth low energy and/or near field communication.

9. Method according to any one of the previous claims, **characterised in that** a successfully performed authentication is valid for limited time.

10. Method according to any one of the previous claims, **characterised in that** after a successfully performed authentication a plurality of different functions of the motor vehicle locking system are enabled for use.

11. Method according to any one of the previous claims, **characterised in that** a successfully performed authentication is indicated by an optical and/or acoustic signal which is generated by the external transmitting/receiving device (3) and/or by a signal transmitter of the motor vehicle (1).

12. Motor vehicle locking system that is adapted to carry out an authentication method according to any one of the previous claims and has an optical signal transmitter (2) for transmitting a request in the form of optical signals (4) and a receiving unit for receiving and evaluating a response transmitted back to the receiving unit of the motor vehicle (1) for checking, wherein the system comprises at least one external transmitting/receiving device (3) by means of which a request transmitted by the optical signal transmitter (2) is received and, using an algorithm stored in the external transmitting/receiving device (3), a response for authentication is generated and transmitted back to the receiving unit of the motor vehicle (1), **characterised in that** the external transmitting/receiving device (3) is a mobile radio terminal which has a computer program for processing the received request.

13. Motor vehicle locking system according to claim 12, **characterised in that** the system has a receiving unit for receiving optical signals and/or for receiving radio signals, in particular according to a radio standard.

## Revendications

1. Procédé d'authentification pour vérifier l'autorisation d'un utilisateur dans un système de verrouillage de véhicule automobile, dans lequel une demande est générée et émise par une unité d'émission (2) d'un véhicule automobile (1), qui est reçue pour authentification au moyen d'un dispositif d'émission/réception externe (3), et dans lequel une réponse est générée à partir de la demande au moyen du dispositif d'émission/réception externe (3) en utilisant un algorithme, et la réponse est renvoyée par le dispositif d'émission/réception externe à une unité de réception du véhicule automobile (1) et évaluée pour vérification, dans lequel l'unité d'émission (2) émet la demande sous forme de signaux optiques (4) qui sont détectés au moyen d'au moins un capteur optique (5) sur le dispositif d'émission/réception externe (3), **caractérisé en ce que** le dispositif d'émission/réception externe (3) est un terminal radio mobile qui présente un programme informatique pour traiter la demande reçue.

2. Procédé selon la revendication 1, **caractérisé en ce que** les signaux optiques (4) sont des signaux lumineux dans la gamme de longueurs d'onde visible et/ou non visible.

3. Procédé selon l'une quelconque des revendications précédentes, **caractérisé en ce qu'**une unité d'évaluation du véhicule automobile (1) détermine un résultat de test en appliquant le même algorithme à la demande et effectue une comparaison avec la réponse renvoyée par le dispositif d'émission/réception externe (3).

4. Procédé selon l'une quelconque des revendications précédentes, **caractérisé en ce qu'**au moins un nombre aléatoire est transmis au moyen des signaux optiques (4), à partir duquel une réponse, en particulier un nombre de réponses, est déterminée en utilisant l'algorithme.

5. Procédé selon l'une quelconque des revendications précédentes, **caractérisé en ce qu'**au moyen du dispositif d'émission/réception externe (3), une réponse à la demande est générée en utilisant l'algorithme et est affichée sous forme d'un code, en particulier sous forme d'un code à barres ou code 2D ou code à barres 2D ou code à points ou code QR, sur une unité d'affichage (6) du dispositif d'émission/réception externe (3), dans lequel le code est lu au moyen d'une unité de lecture du véhicule automobile (1).

6. Procédé selon l'une quelconque des revendications précédentes, **caractérisé en ce qu'**une unité d'éclairage du véhicule automobile (1) est utilisée comme unité d'émission (2), en particulier un éclairage de poignée de porte et/ou un éclairage de plaque d'immatriculation et/ou un phare et/ou un feu arrière.

7. Procédé selon l'une quelconque des revendications précédentes, **caractérisé en ce que** le procédé d'authentification est effectué à l'extérieur du véhicule automobile (1) pour vérifier l'autorisation d'accès au véhicule automobile (1) et/ou à l'intérieur du véhicule automobile pour détecter la présence d'un utilisateur autorisé à l'intérieur du véhicule automobile.

8. Procédé selon l'une quelconque des revendications précédentes, **caractérisé en ce que** la retransmission de la réponse du dispositif d'émission/réception externe (3) est effectuée au moyen de signaux optiques et/ou en utilisant un standard radio, notamment Bluetooth et/ou Bluetooth low energy et/ou communication en champ proche.

9. Procédé selon l'une quelconque des revendications précédentes, **caractérisé en ce qu'**une authentification effectuée avec succès présente une validité limitée dans le temps.

10. Procédé selon l'une quelconque des revendications précédentes, **caractérisé en ce que** plusieurs fonctions différentes du système de verrouillage de véhicule automobile sont libérées pour être utilisées après une authentification effectuée avec succès.

11. Procédé selon l'une quelconque des revendications précédentes, **caractérisé en ce qu'**une authentification réussie est indiquée par un signal optique et/ou acoustique qui est généré par le dispositif d'émission/réception externe (3) et/ou par un émetteur de signal du véhicule automobile (1).

12. Système de verrouillage de véhicule automobile, qui est conçu pour mettre en oeuvre un procédé d'authentification selon l'une quelconque des revendications précédentes et qui présente un émetteur de signaux optiques (2) pour émettre une demande sous forme de signaux optiques (4) et une unité de réception pour recevoir et évaluer une réponse renvoyée à l'unité de réception du véhicule automobile (1) pour vérification, dans lequel le système comprend au moins un dispositif d'émission/réception externe (3), au moyen duquel une demande transmise par l'émetteur de signaux optiques (2) est reçue et, en utilisant un algorithme stocké dans le dispositif d'émission/réception externe (3), une réponse pour l'authentification est générée et renvoyée à l'unité de réception du véhicule automobile (1),
**caractérisé en ce que** le dispositif d'émission/réception externe (3) est un terminal radio mobile qui présente un programme informatique pour traiter la demande reçue.

13. Système de verrouillage pour véhicule automobile selon la revendication 12, **caractérisé en ce que** le système présente une unité de réception pour recevoir des signaux optiques et/ou pour recevoir des signaux radio, en particulier selon une norme radio.
